# EUROPEAN PATENT APPLICATION

(11) **EP 4 266 560 A1**
(43) Date of publication of application: **25.10.2023**
(21) Application number: 21911425.3
(22) Date of filing: 17.12.2021
(51) Int. Cl.: H02K 15/02, H02K 15/12, H01F 27/245, H01F 41/02

(54) **LAMINATED IRON CORE AND MANUFACTURING METHOD THEREOF**

(30) Priority: 21.12.2020 KR 20200180113
(71) Applicant: POSCO Co., Ltd, Pohang-si, Gyeongsangbuk-do 37859 (KR)
(72) Inventor: KIM, Jungwoo, Pohang-si, Gyeongsangbuk-do 37859 (KR); HA, Bongwoo, Pohang-si, Gyeongsangbuk-do 37859 (KR); LEE, Donggyu, Pohang-si, Gyeongsangbuk-do 37859 (KR); NO, Taeyoung, Pohang-si, Gyeongsangbuk-do 37859 (KR); PARK, Gyeongryeol, Pohang-si, Gyeongsangbuk-do 37859 (KR)
(74) Representative: Meissner Bolte Partnerschaft mbB
(86) International application number: PCT/KR2021/019337
(87) International publication number: WO 2022/139358

(57) **Abstract**

The present disclosure relates to a method for manufacturing an electrical steel sheet laminate, the method comprising the steps of: preparing an electrical steel sheet strip including an adhesive layer; coating the strip with a fusion accelerator including a silane coupling agent, a curing agent, and a solvent; fabricating metal parts from the strip; and laminating the metal parts and attaching same to each other by compression.

## Description

### [Technical Field]

The present disclosure relates to a method for manufacturing a laminated core. More particularly, the present disclosure relates to a method of manufacturing a laminated core using an electrical steel sheet on which a bonding layer is formed.

### [Background Art]

A non-oriented electrical steel sheet is a steel sheet with uniform magnetic properties in all directions on a rolled plate, and has been widely used in a motor, a core of a generator, an electric motor, a small transformer, etc.

An electrical steel sheet may be divided into two types: a type in which stress relief annealing (SRA) should be performed to improve magnetic properties after punching and a type in which stress relief annealing is omitted when the cost loss due to heat treatment is greater than the effect of magnetic properties by the stress relief annealing.

An insulating film is a film coated in a final manufacturing process of laminates such as a motor, a core of a generator, an electric motor, and a small transformer, and generally requires electrical properties to suppress the occurrence of an eddy current. In addition, continuous punching processability, adhesion resistance, surface adhesion, and the like are required. The continuous punching processability refers to the ability to suppress wear of a mold when forming a core by laminating a plurality of cores after punching into a predetermined shape. The adhesion resistance refers to the ability to prevent adhesion between core steel sheets after the stress relief annealing process of restoring the magnetic properties by removing a processing stress of the steel sheet.

In addition to these basic properties, excellent coating workability of a coating solution, solution stability that can be used for a long time after mixing, and the like are also required. Such an insulating film can be manufactured as an electrical steel sheet laminate only when a separate fastening method such as welding, clamping, or interlocking is used.

### [Disclosure]

### [Technical Problem]

The present disclosure attempts to provide a method of manufacturing a laminated core using an electrical steel sheet. Specifically, the present disclosure attempts to provide a manufacturing method in which adhesive properties of a laminated core manufactured using an electrical steel sheet formed with an adhesive coating layer are improved.

The present disclosure attempts to improve manufacturing productivity of a bonding core by coating a fusion accelerator on a surface of a steel sheet before punching a bonding article with a mold to minimize compression and heating inside or outside the mold.

### [Technical Solution]

According to an embodiment of the present disclosure, a method of manufacturing an electrical steel sheet laminate includes: preparing an electrical steel sheet strip including an adhesive layer; coating the strip with a fusion accelerator including a silane coupling agent, a curing agent, and a solvent; fabricating metal parts from the strip; and laminating the metal parts and attaching the metal parts to each other by compression.

The solvent in the fusion accelerator may be a non-polar solvent, and a solubility polarity index of the non-polar solvent may be one or more selected from the group consisting of an alcohol-based solvent, an ether-based solvent, and a ketone-based solvent having a solubility polarity index of 3 or more and 10 or less.

The solvent in the fusion accelerator may have a boiling point of 50 to 200°C.

The solvent in the fusion accelerator may be one or more selected from the group consisting of iso-butanol, N-butanol, tert-butanol, butyl ethoxyethanol, 2-(2-methoxyethoxy)ethanol, 2-(2-ethoxyethoxy)ethanol, 2-(2-propoxyethoxy)ethanol, 2-(2-butoxyethoxy)ethanol, methyl ethyl ketone, methyl isobutyl ketone, isophorone, cyclohexanone, and acetone.

The silane coupling agent in the fusion accelerator may be one or more selected from the group consisting of epoxy-based silane, vinyl-based silane, and amino-based silane.

The curing agent in the fusion accelerator may be one or more selected from the group consisting of polycarbodiimide, aziridine, cycloaliphatic amine, polyisocyanate, melamine, and aromatic amine.

The fusion accelerator may contain 79 to 99 wt% of solvent, 0.01 to 10 wt% of silane coupling agent, and 0.1 to 20 wt% of curing agent based on a total weight of the fusion accelerator.

The coating of the strip with a fusion accelerator including the silane coupling agent, the curing agent, and the solvent may include: injecting the fusion accelerator into the strip; and injecting and drying the fusion accelerator.

In the injecting and drying of the fusion accelerator, the drying temperature may be lower than or equal to 50°C.

The laminating the metal parts and attaching the metal parts to each other by the compression may include: laminating the metal parts in a mold; and compressing the laminated metal parts and attaching the laminated metal parts by heating.

In the compressing the laminated metal parts and attaching the laminated metal parts by heating, a heating temperature may be lower than or equal to 120°C.

According to one embodiment of the present disclosure, an electrical steel sheet laminate includes: a laminated electrical steel sheet strip; and a fusion accelerator on a laminated surface, in which the fusion accelerator may include a silane coupling agent and a curing agent.

### [Advantageous Effects]

According to a manufacturing method of one embodiment of the present disclosure, it is possible to obtain a laminated core having improved adhesive properties.

In addition, according to a manufacturing method of one embodiment of the present disclosure, it is possible to provide a laminated core exhibiting excellent adhesive properties even when fused at a low temperature.

### [Description of the Drawings]

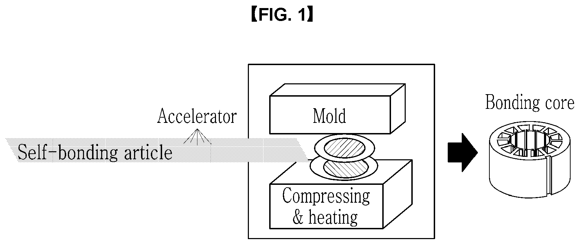

FIG. 1 is a schematic diagram of a method of manufacturing an electrical steel sheet laminate by coating a fusion accelerator according to an embodiment of the present disclosure.

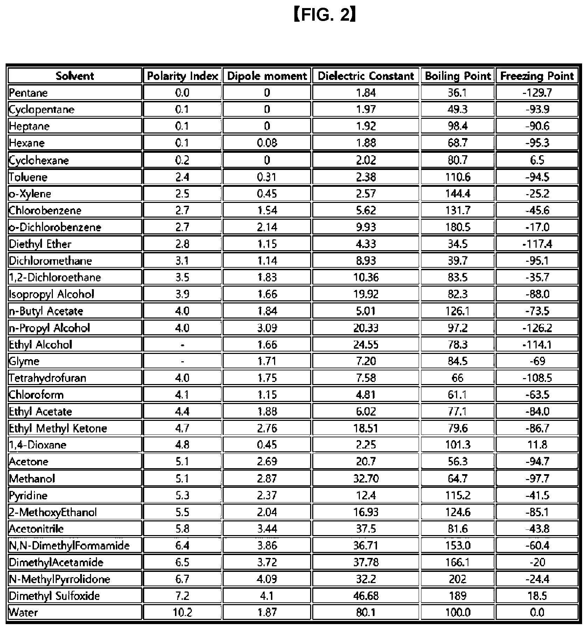

FIG. 2 is a diagram illustrating a standard table of a polarity index of a non-polar solvent used in one embodiment of the present disclosure.

### [Mode for Invention]

The terms first, second, third, and the like are used to describe, but are not limited to, various parts, components, areas, layers and/or sections. These terms are used only to distinguish a part, component, region, layer, or section from other parts, components, regions, layers, or sections. Accordingly, a first part, a component, an area, a layer, or a section described below may be referred to as a second part, a component, a region, a layer, or a section without departing from the scope of the present disclosure.

Terminologies used herein are to mention only a specific exemplary embodiment, and do not to limit the present disclosure. Singular forms used herein include plural forms as long as phrases do not clearly indicate an opposite meaning. The meaning "including" used in the present specification concretely indicates specific properties, areas, integer numbers, steps, operations, elements, and/or components, and is not to exclude presence or addition of other specific properties, areas, integer numbers, steps, operations, elements, and/or components thereof.

When a part is referred to as being "above" or "on" other parts, it may be directly above or on other parts, or other parts may be included in between. In contrast, when a part is referred to as being "directly above" another part, no other part is involved in between.

All terms including technical terms and scientific terms used herein have the same meaning as the meaning generally understood by those skilled in the art to which the present disclosure pertains unless defined otherwise. Terms defined in commonly used dictionaries are additionally interpreted as having meanings consistent with related technical literature and currently disclosed content, and are not interpreted in ideal or very formal meanings unless defined.

The present disclosure will be described more fully hereinafter with reference to the accompanying drawings, in which exemplary embodiments of the invention are shown. As those skilled in the art would realize, the described embodiments may be modified in various different ways, all without departing from the spirit or scope of the present disclosure.

Hereinafter, a bonding steel sheet of the present disclosure is a steel sheet capable of attaching two or more electrical steel sheets by laminating two or more electrical steel sheets, and the use thereof is not particularly limited, but may be, for example, a bonding steel sheet for self-bonding.

According to an embodiment of the present disclosure, a method of manufacturing an electrical steel sheet laminate may include: preparing an electrical steel sheet strip including an adhesive layer; coating the strip with a fusion accelerator including a silane coupling agent, a curing agent, and a solvent; fabricating metal parts from the strip; and laminating the metal parts and attaching the metal parts to each other by compression.

The solvent in the fusion accelerator may be a non-polar solvent, and the non-polar solvent may be one or more selected from the group consisting of an alcohol-based solvent, an ether-based solvent, and a ketone-based solvent.

The solvent in the fusion accelerator may have a solubility polarity index of 3 or more and 10 or less.

The polarity index of the present disclosure is based on Snyder's paper (Snyder's paper was published in Journal of Chromatography A, Volume 92, Issue 2, 22 May 1974, Pages 223-230).

The solvent in the fusion accelerator may have a boiling point of 50 to 200°C.

The solvent in the fusion accelerator may be one or more selected from the group consisting of iso-butanol, N-butanol, tert-butanol, butyl ethoxyethanol, 2-(2-methoxyethoxy)ethanol, 2-(2-ethoxyethoxy)ethanol, 2-(2-propoxyethoxy)ethanol, 2-(2-butoxyethoxy)ethanol, methyl ethyl ketone, methyl isobutyl ketone, isophorone, cyclohexanone, and acetone.

The silane coupling agent in the fusion accelerator may be one or more selected from the group consisting of an epoxy-based silane coupling agent, a vinyl-based silane coupling agent, and an amino-based silane coupling agent.

The epoxy-based silane coupling agent may be 3-glycidoxypropyl trimethoxysilane, 2-(3,4 epoxycyclohexyl) ethyltrimethoxysilane, 3-glycidoxypropyl methyldimethoxysilane, 3-glycidoxypropyl methyldiethoxysilane, and 3-glycidoxypropyl trimethoxysilane, the vinyl-based silane coupling agent may be vinyltrimethoxysilane and vinyltriethoxysilane, and the amino-based silane coupling agent may be 3-aminopropyltriethoxysilane, 3-aminopropyltriethoxysilane, 3-triethoxysilyl-N-(1,3 dimethyl-butylidene) propylamine, N-2-(aminoethyl)-3-aminopropyl methyldimethoxysilane, and N-2-(aminoethyl)-3-aminopropyl trimethoxysilane.

The curing agent in the fusion accelerator may be one or more selected from the group consisting of polycarbodiimide, aziridine, cycloaliphatic amine, polyisocyanate, melamine, and aromatic amine.

The fusion accelerator may contain 79 to 99 wt% of solvent, 0.01 to 10 wt% of silane coupling agent, and 0.1 to 20 wt% of curing agent based on a total weight of the fusion accelerator.

The step of coating the strip with a fusion accelerator including the silane coupling agent, the curing agent, and the solvent may include: injecting the fusion accelerator into the strip; and injecting and drying the fusion accelerator.

In the step of injecting and drying the fusion accelerator, the drying temperature may be lower than or equal to 50°C.

The step of laminating the metal parts and attaching the metal parts to each other by the compression may include: laminating the metal parts in a mold; and compressing the laminated metal parts and attaching the laminated metal parts by heating.

In the step of compressing the laminated metal parts and attaching the laminated metal parts by heating, a heating temperature may be lower than or equal to 120°C.

A method of manufacturing a bonding core product using the existing bonding steel sheet includes punching and laminating cores in a single sheet using a mold, and heat-fusing the laminated core under high-temperature and high-pressure conditions. In this case, when the fusion accelerator of one embodiment of the present disclosure described above is coated on the surface of the bonding steel sheet before punching, the bonding core may be produced at a lower temperature and lower pressure compared to the existing method, so the productivity and economical efficiency of manufacturing of the bonding core may be drastically improved.

According to the method according to one embodiment of the present disclosure, there may be provided an electrical steel sheet laminate having excellent shear strength and high-temperature adhesive strength, including a laminated electrical steel sheet strip and a fusion accelerator on a laminated surface, in which the fusion accelerator contains a silane coupling agent and a curing agent.

A detailed description of the fusion accelerator applied to the laminate is replaced by the description of the manufacturing method.

The preferable Examples and Comparative Examples of the present disclosure will be described. However, the following Examples are only exemplary embodiments of the present disclosure, and the present disclosure is not limited to the following Examples.

### Example

Experiments were conducted to compare the effects of whether or not a fusion accelerator was added according to the present disclosure.

### Electrical steel sheet specimen with adhesive coating layer

A non-oriented electrical steel sheet (100 × 25 mm, 0.35 mmt) was prepared. An adhesive coating solution composed of an epoxy resin and inorganic nanoparticles was coated on one side or both sides of each prepared electrical steel sheet specimen at a thickness of about 3.0 µm using a bar coater and a roll coater, cured at 200 to 250°C for 20 seconds based on a sheet temperature, and then slowly cooled in the air, so a specimen having an adhesive coating layer was prepared.

### Manufacturing example

As a fusion accelerator according to the present disclosure, a fusion accelerator having compositions shown in Table 1 was prepared. A trace of fusion accelerator was coated on the entire surface of the adhesive coating layer of the electrical steel sheet by spray or cloth. Thereafter, the electrical steel sheet specimens provided with the adhesive coating layer on which the fusion accelerator were laminated by overlapping the surfaces to which the bonding layer is applied, and then compressed with a force of 50 to 1000 Kgf and heat-fused at a temperature of 50 to 150°C for 0.1 to 10 minutes.

**(Table 1)**

| Solvent (wt%) | | | Silane coupling agent (wt%) | Curing agent (wt%) |
|---|---|---|---|---|
| 97 | | | 2 | 1 |
| 39 | 48 | 10 | (3-Am inopropyltriethoxysilane) | (Aziri dine) |
| BC (Butyl cellosolve**) | MIBK (Methyl Iso Butyl Ketone) | Acet one | | |

| | | | | |
|---|---|---|---|---|
| **Butyl cellosolve: After the heat fusion with butyl ethoxy ethanol, shear strength and high-temperature tensile strength for each heat fusion temperature were measured and written in Table 3 below. ** Shear strength measurement method: It was measured using a universal testing system. After preparing two specimens, overlapping both ends of the specimens by 12.5 mm, and fusing the specimens under certain conditions, it was a value measured according to the ISO 4587 standard. ** High-temperature adhesive strength measurement method: The high-temperature adhesive strength was measured using a universal testing system. After preparing a sample for measuring shear adhesive strength by preparing two specimens, overlapping both ends of the specimens by 12.5 mm, and then heat-fusing the specimens, it was the value measured according to the ISO 4587 standard after maintaining the prepared sample at 150°C or higher for 1 minute. | | | | |

### Comparative Example 1

Comparative Example 1 is the case of not applying an accelerator, and specimens having an adhesive coating layer were laminated by overlapping surfaces coated with a bonding layer, and then heat-fused at each temperature for 1 minute by compressing with a force of 50 Kgf.

### Comparative Example 2

In Comparative Example 2, an accelerator made of 50:50 of toluene and xylene, which are solvents with a low polarity index, was manufactured, coated on the surface of the prepared specimen in a small amount, and then heat-fused in the same manner as in Example. In Comparative Example, a mixture of a silane coupling agent and a curing agent was used in the same compositions as in Example, except that toluene and xylene were used as solvents.

**(Table 2)**

| | Component | Component Wt% |
|---|---|---|
| Comparative Example 1 | Unused accelerator | |
| Comparative Example 2 | Toluene, Xylene | Toluene/Xylene = 1/1 |

**(Table 3)**

| Division | Fusion temperature (°C) | Shear strength (MPa) | High-temperature adhesive strength (MPa) |
|---|---|---|---|
| Manufacturin g Example | 50 | 2.1 | 0.5 |
| | 100 | 6.2 | 2.1 |
| | 150 | 4.8 | 1.3 |
| Comparative Example 1 | 50 | - | - |
| | 100 | - | - |
| | 150 | 0.5 | - |
| Comparative Example 2 | 50 | - | - |
| | 100 | - | - |
| | 150 | 1.2 | - |

As a result, it was confirmed that the fusion bond of Preparation Example was superior in shear strength and high temperature adhesive strength to that of Comparative Example. The unmeasured values of Comparative Examples 1 and 2 mean that the shear strength or high-temperature adhesive strength is too low to be measured by a mechanical measurement method.

As a result, when an accelerator is not used or when an accelerator with an inappropriate solvent is used even if the accelerator is used, a laminate having excellent adhesion may not be provided.

The present disclosure is not limited to the exemplary embodiments, but may be manufactured in a variety of different forms, and those of ordinary skill in the art to which the present disclosure pertains will understand that the present disclosure may be implemented in other specific forms without changing the technical spirit or essential features of the present disclosure. Therefore, it should be understood that the above-mentioned exemplary embodiments are exemplary in all aspects but are not limited thereto.

## Claims

1. A method of manufacturing an electrical steel sheet laminate, comprising:
preparing an electrical steel sheet strip including an adhesive layer;
coating the strip with a fusion accelerator including a silane coupling agent, a curing agent, and a solvent;fabricating metal parts from the strip; and
laminating the metal parts and attaching the metal parts to each other by compression.

2. The method of claim 1, wherein:
the solvent in the fusion accelerator is a non-polar solvent, and
a solubility polarity index of the non-polar solvent is one or more selected from the group consisting of an alcohol-based solvent, an ether-based solvent, and a ketone-based solvent having a solubility polarity index of 3 or more and 10 or less.

3. The method of claim 1, wherein:
the solvent in the fusion accelerator has a boiling point of 50 to 200°C.

4. The method of claim 1, wherein:
the solvent in the fusion accelerator is one or more selected from the group consisting of iso-butanol, N-butanol, tert-butanol, butyl ethoxyethanol, 2-(2-methoxyethoxy)ethanol, 2-(2-ethoxyethoxy)ethanol, 2-(2-propoxyethoxy)ethanol, 2-(2-butoxyethoxy)ethanol, methyl ethyl ketone, methyl isobutyl ketone, isophorone, cyclohexanone, and acetone.

5. The method of claim 1, wherein:
the silane coupling agent in the fusion accelerator is one or more selected from the group consisting of epoxy-based silane, vinyl-based silane, and amino-based silane.

6. The method of claim 1, wherein:
the curing agent in the fusion accelerator is one or more selected from the group consisting of polycarbodiimide, aziridine, cycloaliphatic amine, polyisocyanate, melamine, and aromatic amine.

7. The method of claim 1, wherein:
the fusion accelerator contains 79 to 99 wt% of solvent, 0.01 to 10 wt% of silane coupling agent, and 0.1 to 20 wt% of curing agent based on a total weight of the fusion accelerator.

8. The method of claim 1, wherein:
the coating of the strip with a fusion accelerator including the silane coupling agent, the curing agent, and the solvent includes:
injecting the fusion accelerator into the strip; and
injecting and drying the fusion accelerator.

9. The method of claim 8, wherein:
in the injecting and drying of the fusion accelerator,
the drying temperature is lower than or equal to 50°C.

10. The method of claim 1, wherein:
the laminating the metal parts and attaching the metal parts to each other by the compression includes:
laminating the metal parts in a mold; and
compressing the laminated metal parts and attaching the laminated metal parts by heating.

11. The method of claim 10, wherein:
in the compressing the laminated metal parts and attaching the laminated metal parts by heating,
a heating temperature is lower than or equal to 120°C.

12. An electrical steel sheet laminate, comprising:
a laminated electrical steel sheet strip; and
a fusion accelerator on a laminated surface,
wherein the fusion accelerator contains a silane coupling agent and a curing agent.
